# EUROPEAN PATENT APPLICATION

(11) **EP 3 267 525 A1**
(43) Date of publication of application: **10.01.2018**
(21) Application number: 16758465.5
(22) Date of filing: 01.03.2016
(51) Int. Cl.: H01M 10/04, H01M 10/42

(54) **MIXED BATTERY GROUP AND BATTERY GROUPING METHOD**

(30) Priority: 01.03.2015 CN 201510091068; 01.03.2015 CN 201520119644 U
(71) Applicant: Beijing Samevolt Co., Ltd., Beijing 100084 (CN)
(72) Inventor: LIU, Guangchen, Beijing 100084 (CN)
(74) Representative: Vitina, Maruta
(86) International application number: PCT/CN2016/075226
(87) International publication number: WO 2016/138850

(57) **Abstract**

Disclosed are a mixed battery group and battery grouping method. The mixed battery group forms a battery group via a serial connection between a primary power supply battery sub-group and an auxiliary power supply battery sub-group, wherein a unit voltage rated capacity of the auxiliary power supply battery sub-group is higher than that of the primary power supply battery sub-group. The mixed battery group provides an entire voltage output of a whole battery group to supply power outwards, and also provides one or more auxiliary power supply having a voltage lower than the entire voltage of the whole battery group to supply power outwards.

## Description

### TECHNICAL FIELD

The present invention relates to the technical field of battery groups, in particular to the mixed battery group and battery grouping method via serial connection as well as serial-parallel connection.

### BACKGROUND OF THE INVENTION

In the traditional battery grouping process, whether via serial connection or serial-parallel connection, manufacturers would recommend to group the same brand, the same model and the same batch of batteries together in order to reduce the influence of inconsistency between batteries on the service life of battery groups as much as possible. Moreover, in the sorting process, the batteries having the near capacities are grouped. Therefore, the capacity of the battery corresponding to the unit voltage of the whole battery group after grouping is the same. And after the traditional battery grouping, only one set of power supply voltage, working as the power supply of the whole battery group, is provided for supplying power outwards.

High voltage is one of the characteristics of battery groups. In some application occasions, such as the voltage of the power battery group in electric automobiles is up to 400 volts. In the whole system powered by battery groups, there are some electric devices having different rated voltages. For example, the rated voltage of the motor and the motor controller of the power system in electric automobiles is several hundred volts, and the rated voltage of some peripheral auxiliary electrical equipment, such as an instrument/headlamp/steering lamp/horn/VCU/ electric vehicle window/sunroof/windshield wiper/steering booster pump/A BS safety air bag, is only 12V. So it is necessary to additionally arrange the DC-DC converter to convert the high voltage of the battery group into the low voltage required by the auxiliary electrical equipment. And the DC-DC converter not only increases the volume, weight and the cost, but also wastes the precious electric energy of battery groups due to the low conversion efficiency. Moreover, the DC-DC converter could be a fault point, which thus reduces the reliability of the system.

In other application occasions such as an electric bicycle or an electric tricycle, the voltage grades of the power battery group are 36 volts, 48 volts, 60 volts and so on. In order to control cost, the auxiliary electrical equipment such as instrument/horn/automobile lamp/middle control lock of the electric bicycles or electric tricycles directly use the output voltage of the power battery groups to supply power without using a DC-DC converter. However, the output voltage of the power battery groups has exceeded the safety voltage of human body, and the peripheral auxiliary electrical equipment are distributed at the periphery of the handlebar and the automobile body in a scattered mode. Therefore, the electric shock risk of a rider is increased, which could endanger the personal safety of the rider.

### TECHNICAL SOLUTIONS

The mixed battery group disclosed by the present invention has the advantages that the defects of the existing technology are overcome. The batteries having different capacities are grouped in series or series-parallel connection, or a plurality of batteries having the same capacity are mixed and grouped in series or in series-parallel connection. After grouping, the rated capacity of the battery corresponding to the unit voltage of the whole battery group is not identical, wherein the power supply leads at the two ends of the battery group having a slightly large capacity can supply power outwards. That is to say that the mixed battery group provides an entire voltage output of a whole battery group to supply power outwards, and also provides one or more auxiliary power supply having a voltage lower than the entire voltage of the whole battery group to supply power outwards.

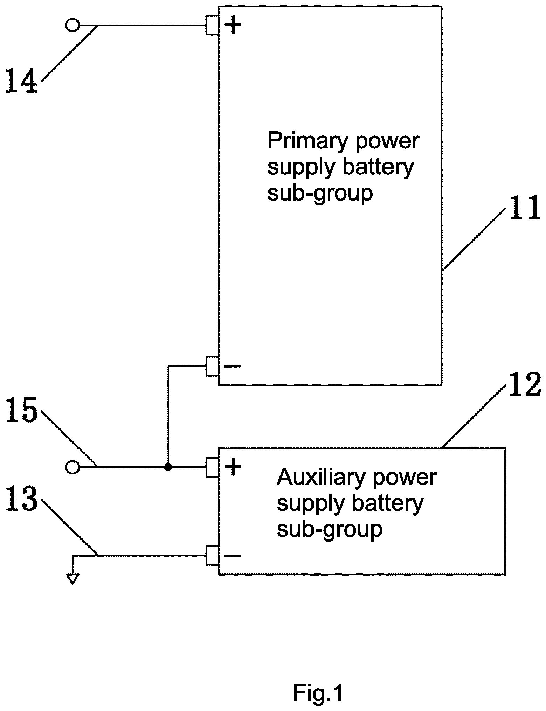

In the first aspect of the invention, the invention provides a technology solution of mixed battery group, namely the battery group is divided into a primary power supply battery sub-group and an auxiliary power supply battery sub-group which are connected in series. As shown in Fig. 1, the primary power supply battery sub-group 11 is connected with the auxiliary power supply battery sub-group 12 in series.

Further, the primary power supply battery sub-group is composed of one battery, or is composed of two or more batteries which are connected in series or in parallel or in series-parallel.

Further, the auxiliary power supply battery sub-group is composed of one battery, or is composed of two or more batteries which are connected in series or in parallel or in series-parallel. The battery capacity corresponding to the unit voltage of the auxiliary power supply battery sub-group is higher than the battery capacity corresponding to the unit voltage of the primary power supply battery sub-group. As shown in Fig. 1, the battery capacity corresponding to the unit voltage of the auxiliary power supply battery sub-group 12 is higher than the battery capacity corresponding to the unit voltage of the primary power supply battery sub-group 11.

Further, the whole battery group is composed of a primary power supply battery sub-group and an auxiliary power supply battery sub-group which are connected in series. And there are power supply leads at the two ends of the auxiliary power supply battery sub-group to supply power outwards, namely, the auxiliary power supply battery sub-group can supply power for the whole battery group together with the primary power supply battery sub-group, and the auxiliary power supply which is lower than the voltage of the battery group can be provided at the same time to supply power outwards. As shown in Fig. 1, power supply leads 13 and 15 are arranged at the two ends of the auxiliary power supply battery sub-group 12 and can supply power outwards, and is responsible for the external power supply of the whole battery group together with the primary power supply battery sub-group 11, wherein the output voltage of the power supply output ends 13 and 15 of the auxiliary power supply battery sub-group is lower than the output voltage of the power supply output ends 13 and 14 of the battery group. That is to say the auxiliary power supply battery sub-group can provide additional power source which is lower than the battery group voltage to supply power outwards.

Further, the primary power supply battery sub-group and the auxiliary power supply battery sub- group are connected in series in three ways as following:

Firstly, the whole battery group and the auxiliary power supply battery sub-group share a negative pole after grouping, as shown in Fig. 1, 13 and 14 are power supply output ends of the whole battery group, 13, 15 are the auxiliary power supply output ends, namely, the whole battery group and the auxiliary power supply battery sub-group share a negative pole 13;

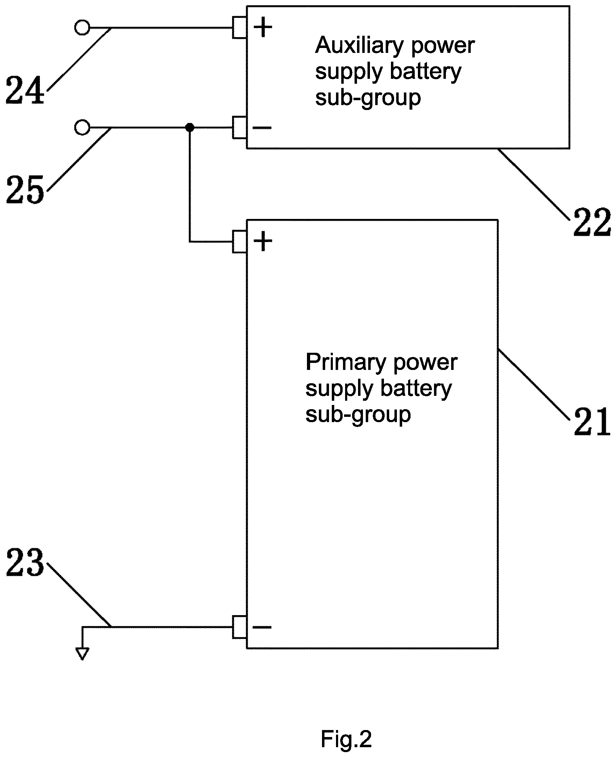

Secondly, after grouping, the whole battery group and the auxiliary power supply battery sub-group share a positive pole. As shown in Fig. 2, the primary power supply battery sub-group 21 and the auxiliary power supply battery sub-group 22 are connected in series, and the power supply output ends of the whole battery group are 23 and 24, the power supply output ends of the auxiliary power supply are 24 and 25, and the whole battery group and the auxiliary power supply battery sub-group share the positive pole 24;

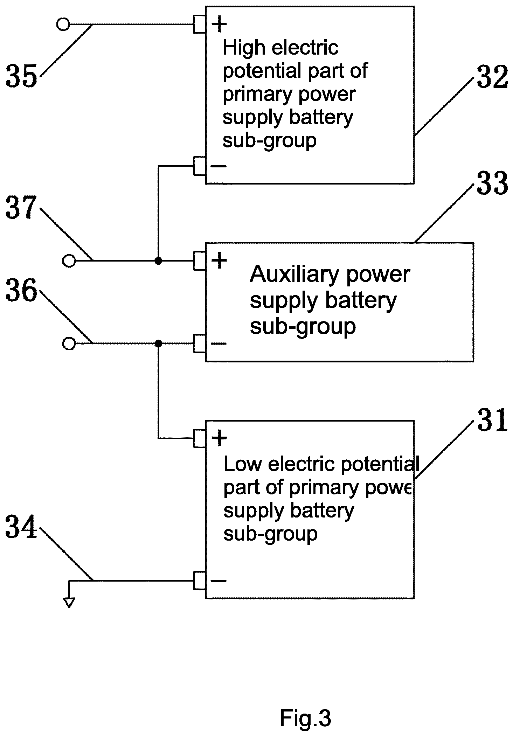

Thirdly, the primary power supply battery group can be divided into two parts which can be connected in series, and the auxiliary power supply battery sub-group is connected in series in the middle, namely the negative pole of the high electric potential part of the primary power supply battery sub-group is connected with the positive pole of the auxiliary power supply battery sub-group, and the positive pole of the low electric potential part of the primary power supply battery sub-group is connected with the negative pole of the auxiliary power supply battery sub-group. As shown in Fig. 3, the primary power supply battery sub-group is divided into a low electric potential part 31 and a high electric potential part 32 which are connected with the auxiliary power supply battery sub-group 33 in the middle. The positive pole 35 of the high electric potential part 32 of the primary power supply battery sub-group and the negative pole 34 of the low electric potential part 31 of the primary power supply battery sub-group are the power supply output ends of the whole battery group, while the positive pole 37 and the negative pole 36 of the auxiliary power supply battery sub-group 33 are the auxiliary power supply output ends.

Further, more than one auxiliary power supply battery sub-group can be arranged in the whole battery group and the plurality of auxiliary power supply battery sub-groups can be connected in series and are separated by a primary power supply battery sub-group in the middle. Moreover, these auxiliary supply battery sub-groups can be connected in series, namely the negative pole of the auxiliary power supply battery sub-group with relatively high electric potential is connected with the positive pole of the auxiliary power supply battery sub-group with lower electric potential, and they share a power supply lead or a common negative pole, or a common positive pole.

Further, more than one auxiliary power supply battery group can be arranged in the whole battery group. The plurality of auxiliary power supply battery packs can be connected in series in series and are separated by a main power supply battery pack in the middle, or in series connection, the negative electrode of the auxiliary power supply battery pack with relatively high electric potential is connected with the positive electrode of the auxiliary power supply battery pack with lower potential, and a power supply lead is shared, or a common negative pole or a common positive pole.

Further, the rated capacity and the rated current of the battery or battery group corresponding to any section of the voltage of the battery group should not only meet the requirements of the rated capacity and rated current of the whole battery group, but also meet the requirements of the rated capacity and the rated current of one or more auxiliary power supply sub-groups.

Further, the connecting lines between all the batteries in the whole battery group and the external power supply leads are firmly connected. Moreover, the wire diameter specification meets the power requirements and has certain redundancy.

Further, the mixed battery group should adopt one of the following charging schemes:
Firstly, a charger capable of independently charging each battery is selected, and the charging parameters are matched with the capacity of the battery.
Secondly, all batteries of the whole battery group must be smart batteries with self-charging function.
Thirdly, a charging mode which combines the traditional serial charging mode with the two above-mentioned charging modes is adopted, namely a traditional serial charging mode is adopted at the constant current stage of the initial charging stage and then a charger capable of independently charging each battery is adopted or the self-charging function of the battery is utilized to charge itself;

In the second aspect of the invention, the invention discloses a battery grouping method by which the battery group is divided into a primary power supply battery sub-group and an auxiliary power supply battery sub-group connected in series. As shown in Fig.1, the primary power supply battery sub-group 11 is connected with the auxiliary power supply battery sub-group 12 in series.

Further, the primary power supply battery sub-group is composed of one battery, or is composed of two or more batteries which are connected in series or in parallel or in series-parallel.

Further, the auxiliary power supply battery sub-group is composed of one battery, or is composed of two or more batteries which are connected in series or in parallel or in series-parallel. The battery capacity of the unit voltage of the auxiliary power supply battery sub-group is higher than the battery capacity of the unit voltage of the primary power supply battery sub-group. As shown in Fig. 1, the battery capacity of the unit voltage of the auxiliary power supply battery sub-group 12 is higher than the battery capacity of the unit voltage of the primary power supply battery sub-group 11.

Further, the whole battery group is composed of a primary power supply battery sub-group and an auxiliary power supply battery sub-group which are connected in series. And there are power supply leads at the two ends of the auxiliary power supply battery sub-group to supply power outwards, namely, the auxiliary power supply battery sub-group can supply power for the whole battery group together with the primary power supply battery sub-group, and the auxiliary power supply which is lower than the voltage of the battery group can be provided at the same time to supply power outwards. As shown in Fig. 1, power supply leads 13 and 15 are arranged at the two ends of the auxiliary power supply battery sub-group 12 and can supply power outwards, and is responsible for the external power supply of the whole battery group together with the primary power supply battery sub-group 11, wherein the output voltage of the power supply output ends 13 and 15 of the auxiliary power supply battery sub-group is lower than the output voltage of the power supply output ends 13 and 14 of the battery group. That is to say the auxiliary power supply battery sub-group can provide additional power source which is lower than the battery group voltage to supply power outwards.

Further, the primary power supply battery sub-group and the auxiliary power supply battery sub- group are connected in series in three ways as following:
Firstly, the whole battery group and the auxiliary power supply battery sub-group share a negative pole after grouping, as shown in Fig. 1, 13 and 14 are power supply output ends of the whole battery group, 13, 15 are the auxiliary power supply output ends, namely, the whole battery group and the auxiliary power supply battery sub-group share a negative pole 13;
Secondly, after grouping, the whole battery group and the auxiliary power supply battery sub-group share a positive pole. As shown in Fig. 2, the primary power supply battery sub-group 21 and the auxiliary power supply battery sub-group 22 are connected in series, and the power supply output ends of the whole battery group are 23 and 24, the power supply output ends of the auxiliary power supply are 24 and 25, and the whole battery group and the auxiliary power supply battery sub-group share the positive pole 24;
Thirdly, the primary power supply battery group can be divided into two parts which can be connected in series, and the auxiliary power supply battery sub-group is connected in series in the middle, namely the negative pole of the high electric potential part of the primary power supply battery sub-group is connected with the positive pole of the auxiliary power supply battery sub-group, and the positive pole of the low electric potential part of the primary power supply battery sub-group is connected with the negative pole of the auxiliary power supply battery sub-group. As shown in Fig. 3, the primary power supply battery sub-group is divided into a low electric potential part 31 and a high electric potential part 32 which are connected with the auxiliary power supply battery sub-group 33 in the middle. The positive pole 35 of the high electric potential part 32 of the primary power supply battery sub-group and the negative pole 34 of the low electric potential part 31 of the primary power supply battery sub-group are the power supply output ends of the whole battery group, while the positive pole 37 and the negative pole 36 of the auxiliary power supply battery sub-group 33 are the auxiliary power supply output ends.

Further, more than one auxiliary power supply battery sub-group can be arranged in the whole battery group and the plurality of auxiliary power supply battery sub-groups can be connected in series and are separated by a primary power supply battery sub-group in the middle. Moreover, these auxiliary supply battery sub-groups can be connected in series, namely the negative pole of the auxiliary power supply battery sub-group with relatively high electric potential is connected with the positive pole of the auxiliary power supply battery sub-group with lower electric potential, and they share a power supply lead or a common negative pole, or a common positive pole.

Further, the rated capacity and the rated current of the battery or battery group corresponding to any section of the voltage of the battery group should not only meet the requirements of the rated capacity and rated current of the whole battery group, but also meet the requirements of the rated capacity and the rated current of one or more auxiliary power supply sub-groups.

Further, the connecting lines between all the batteries in the whole battery group and the external power supply leads are firmly connected. Moreover, the wire diameter specification meets the power requirements and has certain redundancy.

Further, the mixed battery group should adopt one of the following charging schemes:
Firstly, a charger capable of independently charging each battery is selected, and the charging parameters are matched with the capacity of the battery.
Secondly, all batteries of the whole battery group must be smart batteries with self-charging function.
Thirdly, a charging mode which combines the traditional serial charging mode with the two above-mentioned charging modes is adopted, namely a traditional serial charging mode is adopted at the constant current stage of the initial charging stage and then a charger capable of independently charging each battery is adopted or the self-charging function of the battery is utilized to charge itself.

### BENEFICIAL EFFECTS

For a high-voltage battery group (such as a battery group of 72 v or more), a DC-DC converter from high voltage to low voltage is omitted, the electric energy loss caused by voltage conversion is avoided, and the discharge capacity of the battery group can be increased so as to increase the endurance mileage of the electric automobile or prolong the standby time of the communication power supply etc. Moreover, the weight, the size and the cost of the system is reduced, the reliability of the system is improved, and the maintenance is convenient.

For a low-voltage battery group (such as a battery group of 60V and below), the rated voltage of the auxiliary electrical equipment can be reduced. For example, in electric bicycles or tricycles, the power supply voltage of the auxiliary electrical equipment around the handlebar and the periphery of the automobile body, such as instrument /horn /automobile lamp punching control lock and the like, can be reduced within the voltage range of human safety (such as 12V) so as to protect the riders.

If all batteries of the group are smart batteries and are connected together by the power transfer bus (the smart battery and power transfer bus technology refer to the Chinese patent with the application number of 201510086383.3 by the same inventor), and are connected with a brake/damping energy recovery system and other power generation equipment, the auxiliary power supply battery sub-group can not only additionally supply power to the auxiliary electric equipment, but also store electricity which can be transferred and supplemented to the batteries in need for electricity at any time. Therefore, the discharge capacity of the battery group and the overall service life of the battery group can be remarkably prolonged.

### BRIEF DESCRIPTION OF THE DRAWINGS

Fig. 1 is a structural schematic block diagram of a mixed battery group, wherein the auxiliary power supply battery sub-group and the whole battery group share a negative pole.
Fig. 2 is a structural schematic block diagram of a mixed battery group, wherein the auxiliary power supply battery sub-group and the whole battery group share a positive pole.
Fig. 3 is a structural schematic block diagram of a mixed battery group, wherein the auxiliary power supply battery sub-group and the whole battery group do not share positive and negative poles.
Fig. 4 is a structural schematic block diagram of embodiment 1 of a mixed battery group.
Fig. 5 is a structural schematic block diagram of embodiment 2 of a mixed battery group.
Fig. 6 is a structural schematic block diagram of embodiment 3 of a mixed battery group.
Fig. 7 is a structural schematic block diagram of embodiment 4 (optimal implementation mode) of a mixed battery group.

### PREFERRED EMBODIMENTS OF THE INVENTION

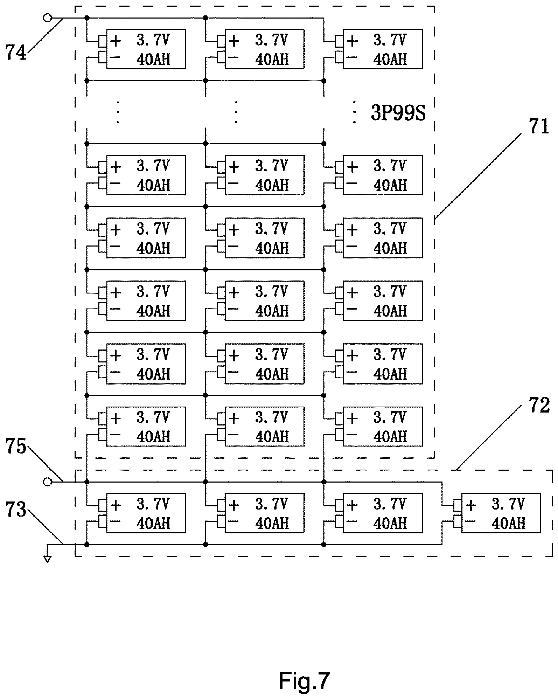

With reference to Fig. 7, a structural schematic block diagram of the mixed battery group of the invention is described. The batteries having the same capacity are grouped by series and parallel connection, while the capacity of the battery corresponding to the unit voltage of the whole battery group is different. The mixed battery group can be applied to solar energy or wind energy storage systems. The whole battery group is composed of 301 3.7V40AH batteries which are grouped by series-parallel connection. The primary power supply battery sub-group 71 is composed of 297 batteries which are evenly divided into 99 groups, namely there are 3 batteries in one group. Firstly, the three batteries are connected in parallel, and then they are connected in series to form a 3P99S group in which the rated voltage and the capacity are 366.3V120AH respectively. In the auxiliary power supply battery sub-group 72, the four batteries are connected in parallel to form a 4P group in which the rated voltage and capacity are 3.7V160AH respectively. Although the whole battery group is composed of batteries having the same capacity of 40AH, the auxiliary power supply battery sub-group is composed of four-battery sub-groups in parallel connection having the capacity of 160AH, and the primary power supply battery sub-group is composed of three-battery sub-groups in parallel connection having the capacity of 120AH, namely the rated capacity of the unit voltage of the auxiliary power supply battery sub-group is 160AH which is higher than the rated capacity of the unit voltage of the primary power supply battery sub-group 120AH.

After grouping, the power supply output ends of the whole battery group are 73 and 74 respectively having the rated output voltage and the capacity 370V120AH, which are used for supplying power to the primary power system. The auxiliary power supply output ends are 73 and 75 with the rated output voltage and the capacity 3.7V40AH, which are used for supplying power for auxiliary electrical equipment such as an energy storage system controller and the like. If the mixed grouping method is used in concert with the electric energy transfer bus system technology, the DC-DC converter from high voltage to low voltage can be omitted so as to save the cost and avoid the electric energy loss in voltage conversion. At the same time, the weight, volume and cost of the system are reduced. Moreover, the reliability of the system is improved, and the maintenance is convenient.

The invention is further described below with reference to the figures and specific embodiments. It should be understood that these figures and embodiments are intended for the purposes of illustration only and are not intended to limit the scope of the invention. Persons skilled in the art can realize more functions or expand the application range of the invention through proper transformation and substitution according to the principle of the invention.

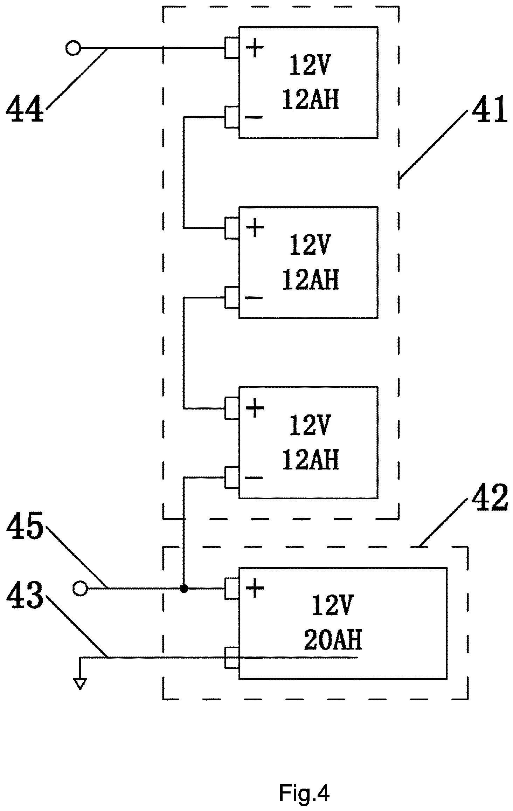

With reference to Fig. 4, the structure schematic block diagram of the mixed battery group of the invention is described. The batteries having different capacities are grouped in serial connection and the mixed battery group can be applied to electric bicycles. The whole battery group is composed of three 12V12AH batteries and one 12V20AH battery connected in series, wherein the primary power supply battery sub-group 41 is composed of three 12V12AH batteries connected in series, the rated voltage and capacity of the primary power supply battery sub-group are 36V12AH, and the auxiliary power supply battery sub-group 42 is composed of one 12V20AH battery, and the rated voltage and capacity of the auxiliary power supply battery sub-group 42 are 12V20AH.

After grouping, the power supply output ends of the whole battery group are 43 and 44 having the rated voltage and the capacity 48V12AH, which are used to supply power for power equipment such as electric motors. The output ends of the auxiliary power supply are 43 and 45 with the rated voltage and the capacity 12V8AH, which can be used to supply power for auxiliary electrical equipment such as instrument/horn/automobile lamp and the like. According to the method, the power supply voltage of auxiliary electrical equipment such as instrument/horn/automobile lamp and the like around the handlebar and the periphery of a vehicle body can be reduced from 48V to 12V so as to completely eradicate the electric shock risk of riders.

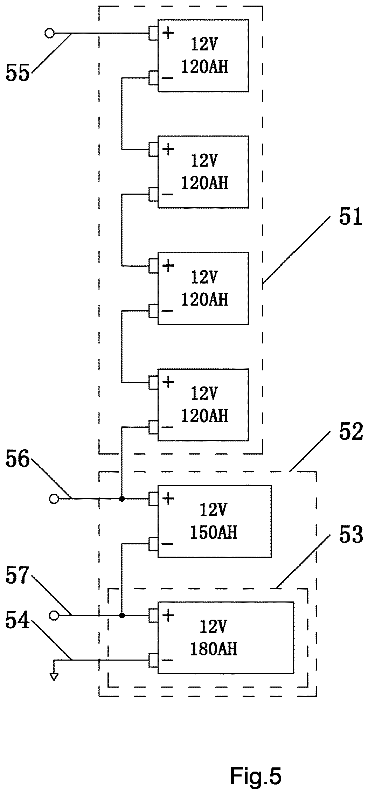

With reference to Fig. 5, a schematic block diagram of a mixed battery group of the invention is described. The batteries with different capacities are grouped in serial connection and the mixed battery group can be applied to low-speed electric vehicles. The whole battery group is composed of four 12V20AH batteries, one 12V150AH battery and one 12V180AH battery which are grouped in serial connection. The primary power supply battery sub-group 51 is composed of four 12V120AH batteries connected in series, and the rated voltage and capacity of the primary power supply battery sub-group 51 are 48V120AH. The first auxiliary power supply battery sub-group 52 is composed of one 12V150AH battery and one 12V180AH battery connected in series, and the rated voltage and capacity are 24V150AH. The second auxiliary power supply battery sub-group is composed of one 12V180A battery, and the rated voltage and the capacity are 12V180AH.

After grouping, the power supply output ends of the whole battery group are 54 and 55 having the rated output voltage and capacity 72V120AH, which are used to supply power for power equipment such as electric motors. The first group of auxiliary power supply output ends are 54 and 56 having the rated output voltage 24V30AH, which can be used to supply power for air conditioners. The second group of auxiliary power supply output ends are 54 and 57 having the rated output capacity 12V30AH, which can be used to supply power for auxiliary electrical equipment such as an instrument /headlamp /steering lamp /horn /electric vehicle window and the like. If the mixed battery group is applied, the DC-DC converter from high voltage to low voltage can be omitted so as to save the cost and avoid the electric energy loss in voltage conversion. At the same time, the weight, volume and cost of the system are reduced. Moreover, the reliability of the system is improved, and the maintenance is convenient.

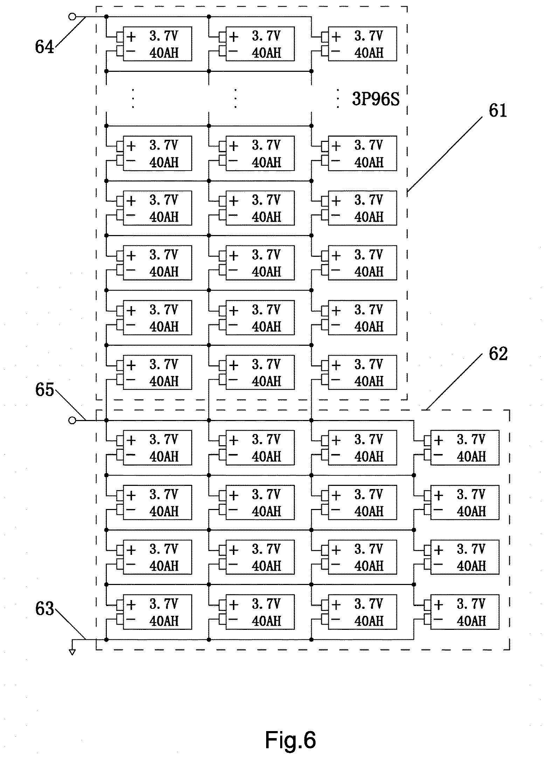

In reference with Fig. 6, a structural schematic block diagram of the mixed battery group of the present invention is described. The batteries having same capacities are grouped in serial-parallel connection, but the capacity of the battery corresponding to the unit voltage of the whole battery group is different. The mixed battery group can be applied to electric automobiles. The whole battery group is composed of 304 3.7V40AH batteries in series-parallel connection, wherein the primary power supply battery sub-group 61 is composed of 288 batteries which are evenly divided into 96 sets, namely there are 3 batteries in one set. Firstly, the three batteries are connected in parallel, and then they are connected in series to form a 3P96S group having the rated voltage and the capacity 355.2V120AH. The auxiliary power supply battery sub-group 62 is composed of 16 batteries which are evenly divided into four sets, namely there are four batteries in one set. Firstly, the four batteries are connected in parallel, and then they are connected in series to form a 4P4S group having the rated voltage and the capacity 14.8V160AH. Although the whole battery group is composed of batteries with the same capacity of 40AH, the auxiliary power supply battery sub-group is composed of the sets of four battery in parallel connection having the capacity of 160AH, and the primary power supply battery sub-group is composed of the sets of three battery in parallel connection with the capacity of 120AH, namely the rated capacity of the unit voltage of the auxiliary power supply battery sub-group is 160AH which is higher than the rated capacity of the unit voltage of the primary power supply battery sub-group 120AH.

After grouping, the power supply output ends of the whole battery group are 63 and 64 having the rated output voltage and capacity 370V120AH, which are used to supply power for the primary power system. The auxiliary power supply output ends are 63 and 65 having the rated output voltage and the rated output voltage 14.8V40AH, which is used to supply power for auxiliary electrical equipment such as an instrument /headlamp /steering lamp /horn /VCU / air conditioner /electric vehicle window /sunroof /windshield wiper /steering booster pump /ABS safety air bag and the like. If the mixed grouping method is used in concert with the electric energy transfer bus system technology, the DC-DC converter from high voltage to low voltage can be omitted so as to save the cost and avoid the electric energy loss in voltage conversion. At the same time, the weight, volume and cost of the system are reduced. Moreover, the reliability of the system is improved, and the maintenance is convenient.

Although the present invention has been described above in terms of general description and specific embodiments, it also can be modified or improved on the basis of the present invention, which is obvious to persons skilled in the art. Therefore, such modifications or improvements made without departing from the spirit of the invention all belong to the protection scope of the invention.

### INDUSTRIAL APPLICABILITY

The technology can be applied to any environment requiring battery grouping, including but not limited to the following fields: electric bicycle, electric automobile, electric engineering vehicle, battery energy storage system of train, ship submarine and the like, backup power supply system of the machine room, backup battery group of the communication power source and battery group of the outdoor mobile communication base station, photovoltaic power generation, energy storage of wind power generation, battery group of aerospace vehicles, energy storage battery group of ship submarine and the like.

## Claims

1. A mixed battery group, composed of a primary power supply battery sub-group and an auxiliary power supply battery sub-group; wherein the primary power supply battery sub-group is connected with the auxiliary power supply battery sub-group in series, a capacity of the primary power supply battery sub-group is different from the capacity of the auxiliary power supply battery sub-group, and the primary power supply battery sub-group provides an auxiliary power supply to supply power outwards.

2. The mixed battery group of claim 1, wherein a unit voltage rated capacity of the auxiliary power supply battery sub-group is higher than the unit voltage rated capacity of the primary power supply battery sub-group;
the primary power supply battery sub-group and the auxiliary power supply battery sub-group are connected in series in three ways:
firstly, a whole battery group and the auxiliary power supply battery sub-group share a negative pole after grouping;
secondly, the whole battery group and the auxiliary power supply battery sub-group share a positive pole after grouping; and
thirdly, the primary power supply battery sub-group is divided into two parts connected in series, and the auxiliary power supply battery sub-group is connected in series in the middle, namely the negative pole of a high electric potential part of the primary power supply battery sub-group is connected with the positive pole of the auxiliary power supply battery sub-group, and the positive pole of a low electric potential part of the primary power supply battery sub-group is connected with the negative pole of the auxiliary power supply battery sub-group; the positive pole (35) of the high electric potential part of the primary power supply battery sub-group and the negative pole (34) of the low electric potential part of the primary power supply battery sub-group are the power supply output ends of the whole battery group, while the positive pole (37) of the auxiliary power supply battery sub-group and the negative pole (36) of the auxiliary power supply battery sub-group are auxiliary power supply output ends.

3. The mixed battery group of claim 1, wherein the mixed battery group provides an entire voltage output of a whole battery group to supply power outwards, and also provides one or more power supplies having a voltage lower than the entire voltage of the whole battery group to supply power outwards.

4. A battery grouping method, composed of a primary power supply battery sub-group and an auxiliary power supply battery sub-group connected in series, wherein a capacity of the primary power supply battery sub-group is different from the capacity of the auxiliary power supply battery sub-group, and the primary power supply battery sub-group provides an auxiliary power supply to supply power outwards.

5. The battery grouping method of claim 4, wherein a unit voltage rated capacity of the auxiliary power supply battery sub-group is higher than the unit voltage rated capacity of the primary power supply battery sub-group;
the primary power supply battery sub-group and the auxiliary power supply battery sub-group are connected in series in three ways:
firstly, a whole battery group and the auxiliary power supply battery sub-group share a negative pole after grouping;
secondly, the whole battery group and the auxiliary power supply battery sub-group share a positive pole after grouping; and
thirdly, the primary power supply battery sub-group is divided into two parts connected in series, and the auxiliary power supply battery sub-group is connected in series in the middle, namely the negative pole of a high electric potential part of the primary power supply battery group is connected with the positive pole of the auxiliary power supply battery sub-group, and the positive pole of a low electric potential part of the primary power supply battery sub-group is connected with the negative pole of the auxiliary power supply battery sub-group; the positive pole of the high electric potential part of the primary power supply battery sub-group and the negative pole (34) of the low electric potential part (31) of the primary power supply battery sub-group are power supply output ends of the whole battery group, while the positive pole and the negative pole (36) of the auxiliary power supply battery sub-group (33) are auxiliary power supply output ends.

6. The battery grouping method of claim 4, wherein the mixed battery group provides an entire voltage output of a whole battery group to supply power outwards, and also provides one or more power supplies having a voltage lower than the entire voltage of the whole battery group to supply power outwards.
